# EUROPÄISCHE PATENTSCHRIFT

(11) **EP 2 714 330 B1**
(45) Veröffentlichungstag und Bekanntmachung des Hinweises auf die Patenterteilung: **19.12.2018**
(21) Anmeldenummer: 12713087.0
(22) Anmeldetag: 29.03.2012
(51) Int. Cl.: B24B 23/02, B23Q 11/00

(54) **WERKZEUGMASCHINENBREMSVORRICHTUNG**
BRAKING DEVICE FOR A MACHINE TOOL
FREIN POUR UNE MACHINE OUTIL

(30) Priorität: 24.05.2011 DE 102011076370
(43) Veröffentlichungstag der Anmeldung: 09.04.2014
(73) Patentinhaber: Robert Bosch GmbH, 70442 Stuttgart (DE)
(72) Erfinder: WIKER, Juergen, Mount Prospect, Illinois 600562230 (US); SCHADOW, Joachim, 70563 Stuttgart (DE); MAUTE, Joerg, 71069 Sindelfingen (DE); ESENWEIN, Florian, 73066 Uhingen-Holzhausen (DE); LUTZ, Manfred, 70794 Filderstadt (DE)
(86) Internationale Anmeldenummer: PCT/EP2012/055590
(87) Internationale Veröffentlichungsnummer: WO 2012/159803

(56) Entgegenhaltungen:
- EP-A1- 1 938 924
- EP-A2- 2 364 811
- DE-A1- 3 722 629
- GB-A- 664 051
- GB-A- 1 253 361

## Beschreibung

### Stand der Technik

Aus der EP 1 938 924 B1, die die Basis für den Oberbegriff des Anspruchs 1 bildet, ist bereits eine Handwerkzeugmaschinenbremsvorrichtung bekannt, die eine mechanische Bremseinheit mit einem drehbar um eine Drehachse gelagerten Bremselement und eine Betätigungseinheit zu einer Aktivierung und/oder einer Deaktivierung der Bremseinheit mit einem beweglich gelagerten Betätigungselement aufweist.

### Offenbarung der Erfindung

Die Erfindung geht aus von einer Handwerkzeugmaschinenbremsvorrichtung mit den Merkmalen des Oberbegriffs des Anspruchs 1.

Es wird vorgeschlagen, dass die Werkzeugmaschinenbremsvorrichtung zumindest eine Bewegungswandlungseinheit umfasst, die zumindest ein Bewegungswandlungselement aufweist, das dazu vorgesehen ist, eine Bewegung des Betätigungselements in eine Bewegung eines Gegenbremselements der Bremseinheit zumindest in eine von einer entlang der Drehachse des Bremselements verlaufende Richtung abweichende Richtung umzuwandeln. Der Ausdruck "mechanische Bremseinheit" soll hier insbesondere eine Bremseinheit definieren, die dazu vorgesehen ist, zumindest das Gegenbremselement und/oder das Bremselement der Bremseinheit infolge einer mechanischen Betätigung, insbesondere infolge einer Ausübung einer Kraft eines Bauteils auf das Gegenbremselement und/oder das Bremselement durch einen direkten Kontakt zwischen dem Bauteil und dem Gegenbremselement und/oder dem Bremselement, in eine Bremsstellung und/oder in eine Lösestellung zu überführen, insbesondere entkoppelt von einer magnetischen Kraft. Unter "vorgesehen" soll insbesondere speziell ausgelegt und/oder speziell ausgestattet verstanden werden. Unter einer "Bremsstellung" soll hier insbesondere eine Stellung des Gegenbremselements und/oder des Bremselements verstanden werden, in der zumindest eine Bremskraft zu einer Reduzierung einer Geschwindigkeit in einem vorbestimmten Zeitraum, insbesondere um zumindest mehr als 50 %, bevorzugt zumindest mehr als 65 % und besonders bevorzugt um zumindest mehr als 80 %, eines sich bewegenden Bauteils auf das sich bewegende Bauteil in zumindest einem Betriebszustand ausgeübt wird. Hierbei ist der vorbestimmte Zeitraum insbesondere kleiner als 5 s. Der Begriff "Lösestellung" soll hier insbesondere eine Stellung des Gegenbremselements und/oder des Bremselements definieren, in der eine Einwirkung der Bremskraft zu einer Reduzierung der Geschwindigkeit auf das sich bewegende Bauteil zumindest im Wesentlichen verhindert wird. Die mechanische Bremseinheit ist bevorzugt dazu vorgesehen, das Bauteil insbesondere in einem vorbestimmten Zeitraum größer als 0,1 s, bevorzugt größer als 0,5 s und besonders bevorzugt kleiner als 3 s, ausgehend von einer Arbeitsgeschwindigkeit, abzubremsen, insbesondere auf eine Geschwindigkeit abzubremsen, die kleiner als 50 % der Arbeitsgeschwindigkeit ist, bevorzugt kleiner als 20 % der Arbeitsgeschwindigkeit ist und besonders bevorzugt auf eine Geschwindigkeit von 0 m/s abzubremsen. Besonders bevorzugt ist die mechanische Bremseinheit als Reibbremse ausgebildet.

Die Drehachse des Bremselements verläuft bevorzugt koaxial zu einer Drehachse einer Antriebswelle einer Antriebseinheit, insbesondere eines Elektromotors, einer tragbaren Werkzeugmaschine. Das Bremselement ist besonders bevorzugt drehfest auf der Antriebswelle fixiert. Hierbei ist das Bremselement vorzugsweise mittels eines Presssitzes auf einem drehfest mit der Antriebwelle verbundenen Lüfterrad der tragbaren Werkzeugmaschine fixiert. Es ist jedoch auch denkbar, dass das Bremselement mittels einer formschlüssigen und/oder einer stoffschlüssigen Verbindung auf dem Lüfterrad fixiert ist. Das Lüfterrad kann als Kunststoffbauteil, als Metallbauteil und/oder als ein anderes, einem Fachmann als sinnvoll erscheinendes Bauteil ausgebildet sein. Bei einer Ausgestaltung des Lüfterrads als Metallbauteil kann vorteilhaft eine thermische Überlastung infolge einer Bremskraft verhindert werden. Ferner ist es jedoch auch denkbar, dass das Bremselement direkt mittels einer kraftschlüssigen Verbindung, wie beispielsweise eines Presssitzes, mittels einer formschlüssigen und/oder mittels einer stoffschlüssigen Verbindung auf der Ankerwelle fixiert ist. Ferner ist es ebenfalls denkbar, dass das Bremselement an einem anderen Bauteil der tragbaren Werkzeugmaschine fixiert ist, wie beispielsweise an einem Bauteil eines Getriebes usw. Besonders bevorzugt ist das Bremselement als Bremsscheibe ausgebildet. Die Bremsscheibe ist vorzugsweise aus Edelstahl und/oder aus einem anderen, einem Fachmann als sinnvoll erscheinenden Material, wie beispielsweise Sinterbronze, Stahl, nitriertem Stahl, Aluminium oder einem anderen oberflächenbehandelten Stahl und/oder Metall ausgebildet.
Unter einer "Betätigungseinheit" soll hier insbesondere eine Einheit verstanden werden, die dazu vorgesehen ist, infolge einer Betätigung zumindest des Betätigungselements einen Zustand einer der Betätigungseinheit übergeordneten Einheit zu ändern. Besonders bevorzugt ist die Betätigungseinheit zusätzlich zur Aktivierung und/oder zusätzlich zur Deaktivierung der mechanischen Bremseinheit dazu vorgesehen, infolge einer Betätigung des Betätigungselements eine Energieversorgung einer Antriebseinheit zu ermöglichen und/oder zu unterbrechen. Bei einer Aktivierung der Bremseinheit mittels der Betätigungseinheit wird das Gegenbremselement und/oder das Bremselement in eine Bremsstellung überführt. Bei einer Deaktivierung der Bremseinheit mittels der Betätigungseinheit wird das Gegenbremselement und/oder das Bremselement in eine Lösestellung überführt. Bevorzugt ist das Betätigungselement als Schiebeschalter ausgebildet. Es ist jedoch auch denkbar, dass das Betätigungselement eine andere, einem Fachmann als sinnvoll erscheinende Ausgestaltung aufweist. Vorzugsweise weist das Betätigungselement eine zu einer Drehachse des Bremselements verschiedene Bewegungsachse auf. Hierbei weist das Betätigungselement bevorzugt eine zumindest im Wesentlichen parallel zur Drehachse des Bremselements verlaufende Bewegungsachse auf. Unter einer "Bewegungswandlungseinheit" soll hier insbesondere eine Einheit verstanden werden, die einen Mechanismus, insbesondere eine Rampe, ein Gewinde, ein Kurvengetriebe, ein Koppelgetriebe oder andere, einem Fachmann als sinnvoll erscheinende Mechanismen, umfasst, mittels dessen eine Bewegungsart, wie beispielsweise eine Translation, in eine andere Bewegungsart, wie beispielsweise eine Rotation und/oder eine Überlagerung von Rotation und Translation, umgewandelt werden kann und/oder eine Bewegung eines Bauteils entlang einer Richtung in eine Bewegung eines weiteren Bauteils in eine weitere Richtung umgewandelt werden kann. Die Bewegungswandlungseinheit ist dazu vorgesehen, mittels des Bewegungswandlungselements eine Bewegung des Betätigungselements in eine Bewegung des Gegenbremselements quer zur Drehachse umzuwandeln. Unter dem Ausdruck "quer zur Drehachsd" soll hier insbesondere eine Richtung verstanden werden, die einen zu einem zur Drehachse parallelen Verlauf abweichenden Verlauf aufweist und insbesondere zusammen mit der Drehachse einen von 0° und von 360° oder einem ganzzahligen Vielfachen von 360° abweichenden Winkel einschließt. Mittels der erfindungsgemäßen Ausgestaltung der Werkzeugmaschinenbremsvorrichtung kann vorteilhaft eine von einer Betätigung des Betätigungselements abhängige Aktivierung und/oder Deaktivierung der Bremseinheit erreicht werden.
Des Weiteren wird vorgeschlagen, dass das Bewegungswandlungselement schwenkbar gelagert ist. Der Ausdruck "schwenkbar gelagert" soll hier insbesondere eine Lagerung des Bewegungswandlungselements definieren, wobei das Bewegungswandlungselement eine Bewegungsmöglichkeit um zumindest eine Achse um einen Winkel größer als 1°, bevorzugt größer als 5° und besonders bevorzugt kleiner als 45° aufweist. Hierbei verläuft eine Schwenkachse des Bewegungswandlungselements bevorzugt senkrecht zur Drehachse des Bremselements. In einer alternativen Ausgestaltung verläuft eine Schwenkachse des Bewegungswandlungselements vorzugsweise koaxial zur Drehachse des Bremselements. Es kann konstruktiv einfach eine Bewegung des Betätigungselements vorteilhaft zur Aktivierung und/oder Deaktivierung der Bremseinheit genutzt werden. Ferner kann vorteilhaft eine konstruktiv einfache Kopplung und/oder Entkopplung des Gegenbremselements von dem Bremselement erreicht werden.

Vorteilhafterweise weist die Bremseinheit zumindest ein Federelement auf, das dazu vorgesehen ist, das Gegenbremselement mit einer Federkraft in Richtung des Bremselements zu beaufschlagen. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement ist bevorzugt dazu vorgesehen, das Gegenbremselement mit einer Federkraft entlang einer zumindest im Wesentlichen senkrecht zur Drehachse des Bremselements verlaufenden Richtung zu beaufschlagen. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Es ist jedoch auch denkbar, dass das Bewegungswandlungselement infolge einer elastischen Verformbarkeit eine Kraft bewirken kann, die das Gegenbremselement in Richtung des Bremselements beaufschlagt. In einer alternativen Ausgestaltung ist das Federelement vorzugsweise dazu vorgesehen, das Gegenbremselement mit einer Federkraft einer entlang der Drehachse des Bremselements verlaufenden Richtung zu beaufschlagen. Somit kann vorteilhaft ein Anliegen des Gegenbremselements am Bremselement in zumindest einem Betriebszustand gewährleistet werden. Ferner kann vorteilhaft zumindest in einem Betriebszustand eine automatische Rückstellung des Gegenbremselements in eine Bremsstellung erreicht werden.

Ferner wird vorgeschlagen, dass das Bewegungswandlungselement als Wippe ausgebildet ist, die eine zumindest im Wesentlichen senkrecht zur Drehachse verlaufende Schwenkachse aufweist. Der Ausdruck "Wippe" soll hier insbesondere ein Bauteil definieren, das zumindest einen drehbar gelagerten Schenkel aufweist. Bevorzugt ist der Schenkel an einem Ende drehbar gelagert. Es ist jedoch auch denkbar, dass der Schenkel an einer anderen, einem Fachmann als sinnvoll erscheinenden Stelle des Schenkels drehbar gelagert ist, wie beispielsweise an einer zumindest im Wesentlichen von zwei Enden des Schenkels gleichmäßig beabstandeten Stelle des Schenkels. Die Wippe kann als Kunststoffbauteil, als faserverstärktes Bauteil, als Metallbauteil, als Hybridbauteil und/oder als ein anderes, einem Fachmann als sinnvoll erscheinendes Bauteil ausgebildet sein. Mittels der Ausgestaltung des Bewegungswandlungselements als Wippe kann vorteilhaft ein kompaktes Bewegungswandlungselement erreicht werden.

Vorzugsweise weist die Wippe zumindest einen abgewinkelten Bereich auf, der zur Umwandlung der Bewegung des Betätigungselements mit einem an dem Betätigungselement fixierten Kopplungselement der Betätigungseinheit zusammenwirkt. Unter einem "abgewinkelten Bereich" soll hier insbesondere ein Bereich der Wippe verstanden werden, der mit einer Längsachse der Wippe einen von 0°, von 90°, von 180° und von 360° oder einem ganzzahligen Vielfachen von 360° abweichenden Winkel einschließt. Bevorzugt wird der abgewinkelte Bereich von einer Rampe gebildet, die einstückig mit dem Schenkel der Wippe ausgebildet ist. Das Kopplungselement ist bevorzugt mittels einer Rastverbindung an dem Betätigungselement fixiert. Es ist jedoch auch denkbar, dass das Kopplungselement mittels einer anderen, einem Fachmann als sinnvoll erscheinenden Verbindungsart an dem Betätigungselement fixiert ist. Es kann konstruktiv einfach eine Bewegung des Betätigungselements in eine Bewegung der Wippe umgewandelt werden.

Vorteilhafterweise ist das Gegenbremselement an der Wippe fixiert. Bevorzugt ist das Gegenbremselement mittels einer stoffschlüssigen Verbindung an der Wippe fixiert. Es ist jedoch auch denkbar, dass das Gegenbremselement mittels einer formschlüssigen und/oder mittels einer kraftschlüssigen Verbindung an der Wippe fixiert ist. Das Gegenbremselement ist bevorzugt als Bremsbelag ausgebildet. Der Bremsbelag kann hierbei als Sinterbremsbelag, als organischer Bremsbelag, als Bremsbelag aus Karbon, als Bremsbelag aus Keramik oder als anderer, einem Fachmann als sinnvoll erscheinender Bremsbelag ausgebildet sein. Besonders bevorzugt weist der Bremsbelag eine V-förmige Nut auf, in die das Bremselement zumindest in einer Bremsstellung eingreift und an die Nut begrenzenden Randbereichen anliegt. Es ist jedoch auch denkbar, dass der Bremsbelag eine andere, einem Fachmann als sinnvoll erscheinende Ausgestaltung im Bereich einer Schnittstelle zwischen Gegenbremselement und Bremselement aufweist. Das Bremselement weist vorzugsweise eine mit der V-förmigen Nut des Bremsbelags korrespondierende Ausgestaltung im Bereich der Schnittstelle zwischen Gegenbremselement und Bremselement auf. Mittels der erfindungsgemäßen Ausgestaltung der Werkzeugmaschinenbremsvorrichtung kann vorteilhaft eine bauraumsparende Konstruktion erreicht werden.

In einer alternativen Ausgestaltung der Werkzeugmaschinenbremsvorrichtung wird vorgeschlagen, dass die Bewegungswandlungseinheit als Kurvengetriebe ausgebildet ist. Unter einem "Kurvengetriebe" soll hier insbesondere ein Mechanismus verstanden werden, der infolge einer Bewegung eines ersten Kurvenglieds und infolge eines Zusammenwirkens mit einem zweiten Kurvenglied ein Bauteil ansteuert, das infolgedessen eine durch das Zusammenwirken der Kurvenglieder vorgegebene Bewegung ausführt. Hierbei kann das Kurvengetriebe jegliche, dem Fachmann als sinnvoll erscheinende Ausgestaltungen aufweisen. Es ist beispielsweise denkbar, dass an dem Gegenbremselement Wälzkörper des Kurvengetriebes angeordnet sind, die auf Rampen wälzen, welche in Nuten zur Führung der Wälzkörper in einem Gehäuse der tragbaren Werkzeugmaschine angeordnet sind. Es ist ebenfalls beispielsweise denkbar, dass das Gegenbremselement mittels eines Getriebes infolge einer Betätigung durch das Betätigungselement eine Schwenkbewegung um die Drehachse des Bremselements ausübt, wobei jeweils Rampen des Kurvengetriebes am Gegenbremselement und am Gehäuse angeordnet sind. Hierbei können die Rampen beispielsweise zu einer Reduzierung einer Reibung mit einer Teflonschicht und/oder andere, einem Fachmann als sinnvoll erscheinende Beschichtungen versehen sein. Mittels des Kurvengetriebes kann vorteilhaft eine Selbsthemmung der Bremseinheit zumindest in einem Betriebszustand erreicht werden.

Zudem wird vorgeschlagen, dass das Bewegungswandlungselement als Stift ausgebildet ist, der zur Umwandlung der Bewegung des Betätigungselements mit zumindest einem weiteren Bewegungswandlungselement der Bewegungswandlungseinheit zusammenwirkt. Der Stift ist bevorzugt an einem Umfang des Gegenbremselements angeordnet. Hierbei verläuft der Umfang entlang einer Umfangsrichtung, die in einer sich zumindest im Wesentlichen senkrecht zur Drehachse des Bremselements erstreckenden Ebene verläuft. Es kann konstruktiv einfach eine Führung bei einer Bewegung des Gegenbremselements erreicht werden.

Vorzugsweise ist das weitere Bewegungswandlungselement als Nut ausgebildet, in die der Stift zumindest teilweise eingreift. Die Nut ist bevorzugt in einer dem Gegenbremselement zugewandten Innenwand des Gehäuses der tragbaren Werkzeugmaschine angeordnet. Es ist jedoch auch denkbar, dass die Nut am Gegenbremselement angeordnet ist und dass der Stift an der Innenwand des Gehäuses angeordnet ist. Besonders bevorzugt weist die Nut einen quer zur Drehachse verlaufenden Verlauf auf. Somit kann konstruktiv einfach ein Kurvengetriebe zur Umwandlung einer Bewegung, insbesondere in eine von einer Überlagerung einer Rotation und einer Translation gebildeten Bewegung, erreicht werden.

Ferner geht die Erfindung aus von einer tragbaren Werkzeugmaschine mit zumindest einer erfindungsgemäßen Werkzeugmaschinenschaltvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 50 kg, bevorzugt kleiner als 20 kg und besonders bevorzugt kleiner als 10 kg. Besonders bevorzugt ist die tragbare Werkzeugmaschine als Winkelschleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise als Handhobelmaschine, als Multifunktionswerkzeugmaschine, als tragbare Fräsmaschine, als Schleifmaschine, und/oder als elektrisch betreibbares Gartengerät. Es kann vorteilhaft ein hoher Bedienkomfort für einen Bediener der tragbaren Werkzeugmaschine erreicht werden.

Die erfindungsgemäße Werkzeugmaschinenbremsvorrichtung soll hierbei nicht auf die oben beschriebene Anwendung und Ausführungsform beschränkt sein.

Insbesondere kann die erfindungsgemäße Werkzeugmaschinenbremsvorrichtung zu einer Erfüllung einer hierin beschriebenen Funktionsweise eine von einer hierin genannten Anzahl von einzelnen Elementen, Bauteilen, Vorrichtungen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenbremsvorrichtung in einer schematischen Darstellung,
- Fig. 2: eine Detailansicht der erfindungsgemäßen Werkzeugmaschinenbremsvorrichtung in einer Bremsstellung der erfindungsgemäßen Werkzeugmaschinenbremsvorrichtung in einer schematischen Darstellung,
- Fig. 3: eine weitere Detailansicht der erfindungsgemäßen Werkzeugmaschinenbremsvorrichtung in einer Bremsstellung der erfindungsgemäßen Werkzeugmaschinenbremsvorrichtung in einer schematischen Darstellung,
- Fig. 4: eine weitere Detailansicht der erfindungsgemäßen Werkzeugmaschinenbremsvorrichtung in einer Bremsstellung der erfindungsgemäßen Werkzeugmaschinenbremsvorrichtung in einer schematischen Darstellung,
- Fig. 5: eine weitere Detailansicht der erfindungsgemäßen Werkzeugmaschinenbremsvorrichtung in einem von einem Werkzeugmaschinengehäuse der erfindungsgemäßen Werkzeugmaschine in einer schematischen Darstellung,
- Fig. 6: eine Detailansicht einer alternativen erfindungsgemäßen Werkzeugmaschinenbremsvorrichtung in einer Bremsstellung der alternativen erfindungsgemäßen Werkzeugmaschinenbremsvorrichtung in einer schematischen Darstellung,
- Fig. 7: eine weitere Detailansicht der alternativen erfindungsgemäßen Werkzeugmaschinenbremsvorrichtung in einer Bremsstellung der erfindungsgemäßen Werkzeugmaschinenbremsvorrichtung in einer schematischen Darstellung und
- Fig. 8: eine Detailansicht einer Bewegungswandlungseinheit der alternativen erfindungsgemäßen Werkzeugmaschinenbremsvorrichtung in einer schematischen Darstellung.

### Beschreibung der Ausführungsbeispiele

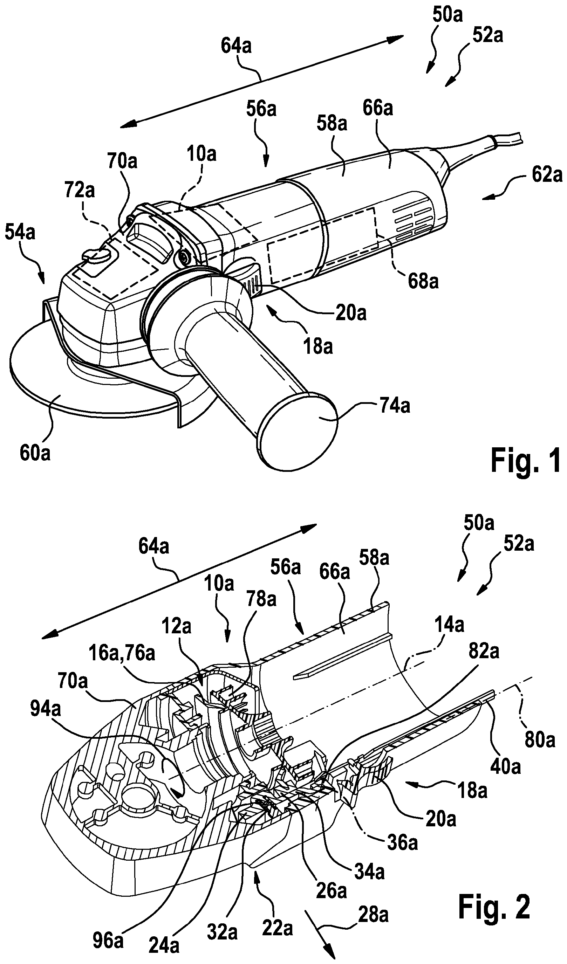

Figur 1 zeigt eine als Winkelschleifmaschine 52a ausgebildete tragbare Werkzeugmaschine 50a mit einer Werkzeugmaschinenbremsvorrichtung 10a. Die Winkelschleifmaschine 52a umfasst eine Schutzhaubeneinheit 54a, ein Werkzeugmaschinengehäuse 56a und einen Haupthandgriff 58a. Der Haupthandgriff 58a erstreckt sich ausgehend von einem Getriebegehäuse 70a des Werkzeugmaschinengehäuses 56a in eine vom Getriebegehäuse 70a abgewandte Richtung, die zumindest im Wesentlichen parallel zu einer Haupterstreckungsrichtung 64a der Winkelschleifmaschine 52a verläuft, bis zu einer Seite 62a des Werkzeugmaschinengehäuses 56a an der ein Kabel der Winkelschleifmaschine 52a zur Energieversorgung angeordnet ist. Der Haupthandgriff 58a bildet ein Motorgehäuse 66a des Werkzeugmaschinengehäuses 56a. Aus dem Getriebegehäuse 70a heraus erstreckt sich eine Spindel (hier nicht näher dargestellt) an der ein Bearbeitungswerkzeug 60a zu einer Bearbeitung eines Werkstücks (hier nicht näher dargestellt) fixiert werden kann. Das Bearbeitungswerkzeug 60a ist als Schleifscheibe ausgebildet. Es ist jedoch auch denkbar, dass das Bearbeitungswerkzeug 60a als Trenn- oder Polierscheibe ausgebildet ist. Das Werkzeugmaschinengehäuse 56a umfasst das Motorgehäuse 66a zur Aufnahme einer Antriebseinheit 68a der Winkelschleifmaschine 52a und das Getriebegehäuse 70a zur Aufnahme einer Abtriebseinheit 72a der Winkelschleifmaschine 52a. Die Antriebseinheit 68a ist dazu vorgesehen, das Bearbeitungswerkzeug 60a über die Abtriebseinheit 72a rotierend anzutreiben. Die Abtriebseinheit 72a ist über ein rotierend antreibbares Antriebselement (hier nicht näher dargestellt) der Antriebseinheit 68a auf eine, einem Fachmann bereits bekannte Art und Weise mit der Antriebseinheit 68a verbunden. An dem Getriebegehäuse 70a ist ein Zusatzhandgriff 74a angeordnet. Der Zusatzhandgriff 74a erstreckt sich quer zur Haupterstreckungsrichtung 64a der Winkelschleifmaschine 52a.

Figur 2 zeigt eine Detailansicht der Werkzeugmaschinenbremsvorrichtung 10a in einem in dem Werkzeugmaschinengehäuse 56a montierten Zustand der Werkzeugmaschinenbremsvorrichtung 10a. Die Werkzeugmaschinenbremsvorrichtung 10a umfasst eine mechanische Bremseinheit 12a, die ein drehbar um eine Drehachse 14a gelagertes Bremselement 16a aufweist, und eine Betätigungseinheit 18a zu einer Aktivierung und/oder einer Deaktivierung der Bremseinheit 12a, die ein beweglich gelagertes Betätigungselement 20a aufweist. Das Bremselement 16a ist als Bremsscheibe 76a ausgebildet. Die Bremsscheibe 76a ist mittels einer kraftschlüssigen Verbindung, wie beispielsweise eines Presssitzes, an einem Lüfterrad 78a der Antriebseinheit 68a fixiert. Hierbei ist die Bremsscheibe 76a auf einer der Abtriebseinheit 72a zugewandten Seite des Lüfterrads 78a angeordnet. Das Lüfterrad 78a ist mittels einer kraftschlüssigen Verbindung drehfest mit der Antriebswelle (hier nicht näher dargestellt) auf eine, einem Fachmann bereits bekannte Art und Weise verbunden. Es ist jedoch auch denkbar, dass das Lüfterrad 78a mittels einer formschlüssigen und/oder mittels einer stoffschlüssigen Verbindung drehfest mit der Antriebswelle verbunden ist. Die Drehachse 14a des Bremselements 16a verläuft somit koaxial zu einer Drehachse der Antriebswelle.

Das Betätigungselement 20a der Betätigungseinheit 18a ist als Schiebeschalter ausgebildet. Hierbei weist das Betätigungselement 20a eine Bewegungsachse 80a auf, die zumindest im Wesentlichen parallel zur Drehachse 14a des Bremselements 16a verläuft. Das Betätigungselement 20a ist entlang der Bewegungsachse 80a translatorisch beweglich am Motorgehäuse 66a gelagert. Zusätzlich zur Aktivierung und/oder zur Deaktivierung der Bremseinheit 12a ist das Betätigungselement 20a dazu vorgesehen, einen Stromkreis zu einer Energieversorgung der Antriebseinheit 68a zu schließen, um eine Inbetriebnahme der Winkelschleifmaschine 52a zu ermöglichen. Das Betätigungselement 20a ist dazu vorgesehen, einen Stromkreis mittels einer Betätigung eines Schalters (hier nicht näher dargestellt) der Winkelschleifmaschine 52a zu schließen.

Des Weiteren umfasst die Werkzeugmaschinenbremsvorrichtung 10a eine Bewegungswandlungseinheit 22a, die ein Bewegungswandlungselement 24a aufweist, das dazu vorgesehen ist, eine Bewegung des Betätigungselements 20a in eine Bewegung eines Gegenbremselements 26a der Bremseinheit 12a in eine von einer entlang der Drehachse 14a des Bremselements 16a verlaufenden Richtung abweichende Richtung 28a umzuwandeln. Das Bewegungswandlungselement 24a ist schwenkbar gelagert. Hierbei ist das Bewegungswandlungselement 24a als Wippe 34a ausgebildet, die eine zumindest im Wesentlichen senkrecht zur Drehachse 14a verlaufende Schwenkachse 36a aufweist. Die Wippe 34a ist in einem montierten Zustand mit einem Ende schwenkbar in einer Lagerausnehmung 82a des Motorgehäuses 66a gelagert. Die Lagerausnehmung 82a weist, in einem Querschnitt in einer zumindest im Wesentlichen senkrecht zur Schwenkachse 36a der Wippe 34a verlaufenden Ebene betrachtet, eine U-förmige Ausgestaltung auf, die auf einer dem Getriebegehäuse 70a zugewandten Seite offen ist. Das in der Lagerausnehmung 82a angeordnete Ende der Wippe 34a weist eine kugelförmige Ausgestaltung auf. Mittels eines Zusammenwirkens der U-förmigen Ausgestaltung der Lagerausnehmung 82a und der kugelförmigen Ausgestaltung des Endes der Wippe 34a, das in der Lagerausnehmung 82a angeordnet ist, wird eine schwenkbare Lagerung der Wippe 34a ermöglicht. Es ist jedoch auch denkbar, dass die schwenkbare Lagerung der Wippe 34a eine andere, einem Fachmann als sinnvoll erscheinende Ausgestaltung aufweist.

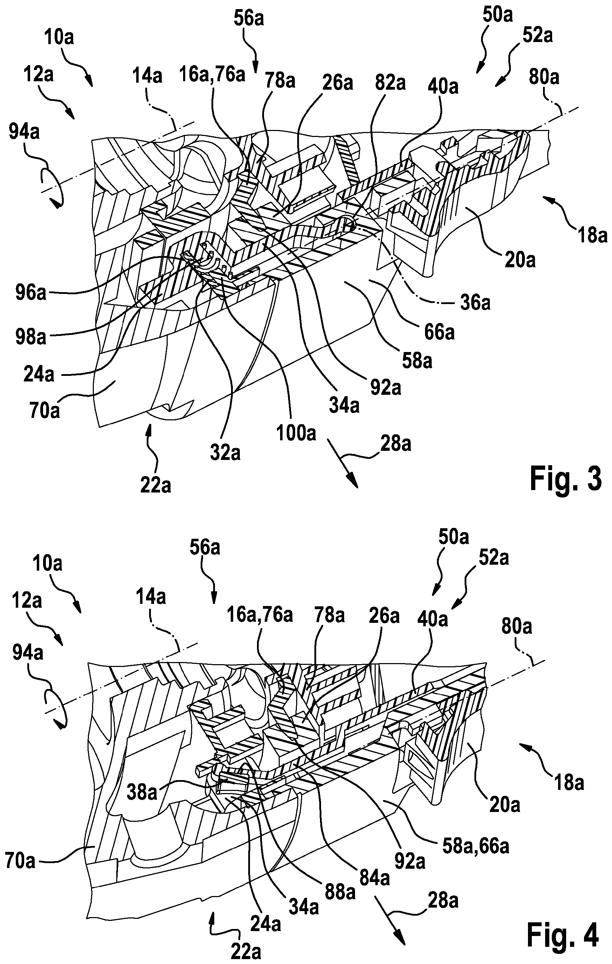

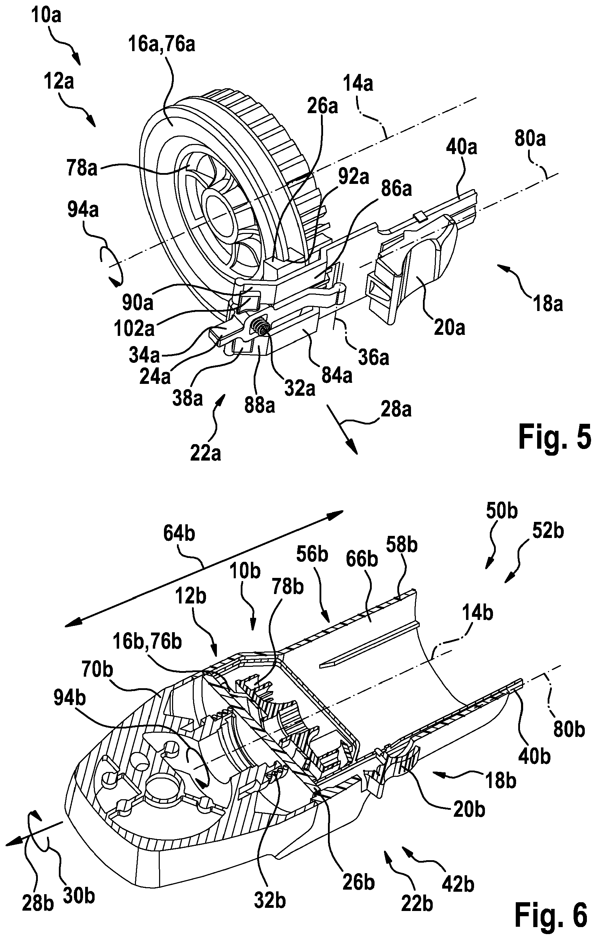

Des Weiteren weist die Wippe 34a zwei abgewinkelte Bereiche 38a, 102a auf, die zur Umwandlung der Bewegung des Betätigungselements 20a mit einem an dem Betätigungselement 20a fixierten Kopplungselement 40a der Betätigungseinheit 18a zusammenwirken (Figur 5). Die abgewinkelten Bereiche 38a, 102a sind an einem Ende der Wippe 34a angeordnet, das dem in der Lagerausnehmung 82a angeordneten Ende der Wippe 34a abgewandt ist. Das Kopplungselement 40a ist als Schaltstange ausgebildet. Hierbei ist das Kopplungselement 40a translatorisch beweglich im Motorgehäuse 66a gelagert. Das Kopplungselement 40a weist auf einer der Wippe 34a zugewandten Seite zwei sich zumindest im Wesentlichen parallel in Richtung der Wippe 34a erstreckende Betätigungsfortsätze 84a, 86a (Figur 5) auf. Die Betätigungsfortsätze 84a, 86a sind, in einem montierten Zustand entlang der Schwenkachse 36a der Wippe 34a betrachtet, relativ zueinander beabstandet angeordnet. Die Betätigungsfortsätze 84a, 86a weisen an ihren Enden, die der Wippe 34a zugewandt sind, jeweils einen abgewinkelten Betätigungsbereich 88a, 90a auf. Die Betätigungsbereiche 88a, 90a sind dazu vorgesehen, mittels eines Zusammenwirkens mit den abgewinkelten Bereichen 38a, 102a die Wippe 34a in eine von der Antriebswelle abgewandte Richtung zu bewegen. Hierbei sind die Betätigungsbereiche 88a, 90a relativ zur Bewegungsachse 80a abgewinkelt. Ferner sind die Betätigungsbereiche 88a, 90a dazu vorgesehen, bei einer translatorischen Bewegung des Koppelelements 40a zur Bewegung der Wippe 34a jeweils auf den abgewinkelten Bereichen 38a, 102a zu gleiten (Figur 4). Hierbei ist es denkbar, dass die abgewinkelten Bereiche 38a, 102a jeweils auf einer den Betätigungsbereichen 88a, 90a zugewandten Seite der abgewinkelten Bereiche 38a, 102a eine Beschichtung zur Reibungsminderung, wie beispielsweise eine Teflonbeschichtung, aufweisen. Es ist jedoch auch denkbar, dass die Betätigungsbereiche 88a, 90a jeweils auf einer den abgewinkelten Bereichen 38a, 102a zugewandten Seite der Betätigungsbereiche 88a, 90a eine Beschichtung zur Reibungsminderung aufweisen oder dass die abgewinkelten Bereiche 38a, 102a und die Betätigungsbereiche 88a, 90a jeweils eine Beschichtung zur Reibungsminderung aufweisen.

Das Gegenbremselement 26a der Bremseinheit 12a ist an der Wippe 34a fixiert. Hierbei ist das Gegenbremselement 26a mittels einer stoffschlüssigen Verbindung, wie beispielsweise durch Kleben, durch Sintern usw., an der Wippe 34a fixiert. Es ist jedoch auch denkbar, dass das Gegenbremselement 26a mittels einer formschlüssigen und/oder mittels einer kraftschlüssigen Verbindung an der Wippe 34a fixiert ist. Es ist beispielsweise denkbar, dass das Gegenbremselement 26a mittels eines Bajonettverschlusses an der Wippe 34a fixiert ist und/oder in einer Aussparung formschlüssig angeordnet ist und mittels einer Druckfeder kraftschlüssig gegen ein Herausfallen gesichert wird. Hierdurch kann eine Auswechselbarkeit des Gegenbremselements 26a, insbesondere im Fall eines abgenutzten Gegenbremselements 26a, erreicht werden. Das Gegenbremselement 26a ist entlang einer zumindest im Wesentlichen senkrecht zur Drehachse 14a des Bremselements 16a räumlich zwischen der als Bremsscheibe 76a ausgebildeten Bremselement 16a und der Wippe 34a angeordnet. Ferner wird das Gegenbremselement 26a bei einer Bewegung der Wippe 34a ebenfalls in eine von der Antriebswelle abgewandte Richtung bewegt. Hierdurch kann das Gegenbremselement 26a der Bremseinheit 12a ausgehend von der in den Figuren 2 bis 5 gezeigten Bremsstellung des Gegenbremselements 26a in eine Lösestellung überführt werden. Die Bremseinheit 12a ist in einer Lösestellung des Gegenbremselements 26a deaktiviert. Ferner kann das Gegenbremselement 26a mittels bei einer Bewegung der Wippe 34a in eine der Antriebswelle zugewandte Richtung ausgehend von der Lösestellung in eine Bremsstellung überführt werden.

Das an der Wippe 34a fixierte Gegenbremselement 26a ist als Bremsbelag ausgebildet, der eine V-förmige Nut 92a aufweist. Die V-förmige Nut 92a ist in einer dem als Bremsscheibe 76a ausgebildeten Bremselement 16a zugewandten Seite des Gegenbremselements 26a eingebracht. Das als Bremsscheibe 76a ausgebildete Bremselement 16a weist hierbei entlang eines Umfangs des als Bremsscheibe 76a ausgebildeten Bremselements 16a, einen, in einer durch die Drehachse 14a des Bremselements 16a verlaufenden Ebene betrachtet, V-förmigen Querschnitt auf. Der Umfang des Bremselements 16a verläuft hierbei entlang einer Umfangsrichtung 94a, die in einer sich zumindest im Wesentlichen senkrecht zur Drehachse 14a des Bremselements 16a erstreckenden Ebene verläuft. In einer Bremsstellung des Gegenbremselements 26a berühren sich der V-förmige Querschnitt des als Bremsscheibe 76a ausgebildeten Bremselements 16a und Randbereiche des Gegenbremselements 26a, die die V-förmige Nut 92a begrenzen, und bilden einen Reibschluss. Hierdurch kann bei einer Drehbewegung des als Bremsscheibe 76a ausgebildeten Bremselements 16a um die Drehachse 14a eine Reibkraft erzeugt werden, die das sich drehende Bremselement 16a abbremst. Hierdurch wird die Antriebswelle, auf der das Bremselement 16a zusammen mit dem Lüfterrad 78a drehfest fixiert ist, ebenfalls abgebremst. In einer Lösestellung des Gegenbremselements 26a sind das Bremselement 16a und das Gegenbremselement 26a zumindest im Wesentlichen kontaktfrei.

Des Weiteren weist die Bremseinheit 12a ein Federelement 32a auf, das dazu vorgesehen ist, das Gegenbremselement 26a mit einer Federkraft in Richtung des Bremselements 16a zu beaufschlagen (Figuren 3 und 5). Das Federelement 32a ist als Druckfeder ausgebildet. Es ist jedoch auch denkbar, dass das Federelement 32a eine andere, einem Fachmann als sinnvoll erscheinende Ausgestaltung aufweist. Das Federelement 32a ist entlang der zumindest im Wesentlichen senkrecht zur Drehachse 14a des Bremselements 16a verlaufenden Richtung räumlich zwischen der Wippe 34a und dem Getriebegehäuse 70a und/oder dem Motorgehäuse 66a angeordnet. Hierbei ist das Federelement 32a in einer Ausnehmung 96a in der Wippe 34a angeordnet. Das Federelement 32a stützt sich mit einem der Wippe 34a zugewandten Ende an einem die Ausnehmung begrenzenden Randbereich der Wippe 34a ab. Mit einem anderen Ende stützt sich das Federelement 32a an dem Getriebegehäuse 70a und/oder dem Motorgehäuse 66a ab. Es ist jedoch auch denkbar, dass sich das Federelement 32a an anderen Bauteilen der Winkelschleifmaschine 52a abstützt, die innerhalb des Getriebegehäuses 70a und/oder des Motorgehäuses 66a angeordnet sind, wie beispielsweise einem Luftleitring der Winkelschleifmaschine 52a usw. Zudem weist der die Ausnehmung 96a begrenzende Randbereich und das Getriebegehäuse 70a und/oder das Motorgehäuse 66a jeweils einen stiftartigen Fortsatz 98a, 100a auf, der jeweils dazu vorgesehen ist, das Federelement 32a zu führen.

Zu einer Inbetriebnahme der Winkelschleifmaschine 52a wird das Betätigungselement 20a der Betätigungseinheit 18a von einem Bediener betätigt. Hierbei verschiebt der Bediener das Betätigungselement 20a ausgehend von einer Ausgangstellung in einer Ausnehmung des Motorgehäuses 66a translatorisch in Richtung des Getriebegehäuses 70a. Infolge der translatorischen Bewegung des Betätigungselements 20a in Richtung des Getriebegehäuses 70a wird das am Betätigungselement 20a fixierte Kopplungselement 40a ebenfalls in Richtung des Getriebegehäuses 70a bewegt. Die Betätigungsbereiche 88a, 90a des Kopplungselements 40a kommen in Kontakt mit den abgewinkelten Bereichen 38a, 102a der Wippe 34a und gleiten während der Bewegung des Kopplungselements 40a in Richtung des Getriebegehäuses 70a auf den abgewinkelten Bereichen 38a, 102a der Wippe 34a. Hierdurch wird die Wippe 34a um die Schwenkachse 36a in die von der Drehachse 14a des Bremselements 16a abgewandte Richtung auf eine Innenwand des Getriebegehäuses 70a zubewegt. Das Federelement 32a wird somit komprimiert. Das Gegenbremselement 26a wird infolge der Bewegung der Wippe 34a in die von der Drehachse 14a des Bremselements 16a abgewandte Richtung bewegt. Hierdurch wird der Reibschluss zwischen dem als Bremsscheibe 76a ausgebildeten Bremselement 16a und dem Gegenbremselement 26a aufgehoben. Der V-förmige Querschnitt des Bremselements 16a ist somit in einer Endstellung des Betätigungselements 20a, in der das Gegenbremselement 26a infolge der Bewegungswandlungseinheit 22a in eine Lösestellung überführt wurde, kontaktfrei zu den Randbereichen des Gegenbremselements 26a, die die V-förmige Nut 92a begrenzen. In der Endstellung des Betätigungselements 20a wird zudem der Stromkreis zur Energieversorgung der Antriebseinheit 68a geschlossen. Es ist jedoch auch denkbar, dass der Stromkreis vor einem Erreichen der Endstellung des Betätigungselements 20a geschlossen wird, um ein Starten der Antriebseinheit 68a unter einer geringen Bremslast für einen Sanftanlauf zu ermöglichen. Das Bremselement 16a kann infolge der Aufhebung des Reibschlusses zwischen dem Bremselement 16a und dem Gegenbremselement 26a ein Drehbewegung um die Drehachse 14a infolge eines Antriebs durch die Antriebseinheit 68a ausüben. Somit kann die Antriebswelle der Antriebseinheit 68a ebenfalls eine Drehbewegung ausüben, um eine Bearbeitung eines Werkstücks (hier nicht näher dargestellt) mittels des Bearbeitungswerkzeugs 60a mit der Winkelschleifmaschine 52a zu ermöglichen.

Zu einer Unterbrechung eines Betriebs der Winkelschleifmaschine 52a wird das Betätigungselement 20a ausgehend von der Endstellung von dem Bediener translatorisch in Richtung des Haupthandgriffs 58a in eine von dem Getriebegehäuse 70a abgewandte Richtung bewegt. Hierdurch wird das Kopplungselement 40a ebenfalls in Richtung des Haupthandgriffs 58a bewegt. Die Betätigungsbereiche 88a, 90a des Kopplungselements 40a gleiten während der Bewegung auf den abgewinkelten Bereichen 38a, 102a der Wippe 34a. Durch ein Zusammenwirken der Betätigungsbereiche 88a, 90a und der abgewinkelten Bereiche 38a, 102a während der Bewegung wird eine Bewegungsmöglichkeit der Wippe 34a in Richtung der Drehachse 14a des Bremselements 16a freigegeben. Die Wippe 34a wird infolge einer Federkraft des Federelements 32a in Richtung der Drehachse 14a des Bremselements 16a bewegt. Das Gegenbremselement 26a wird ebenfalls in Richtung der Drehachse 14a bewegt. Die die V-förmige Nut 92a begrenzenden Randbereiche des Gegenbremselements 26a kommen in Kontakt mit dem V-förmigen Querschnitt des Bremselements 16a. Der Reibschluss zwischen Bremselement 16a und Gegenbremselement 26a wird somit geschlossen.

Sobald das Betätigungselement 20a in die Ausgangsstellung bewegt wurde, befindet sich das Gegenbremselement 26a in der Bremsstellung. Mittels des Reibschlusses zwischen dem Bremselement 16a und dem Gegenbremselement 26a wird eine Drehbewegung des Bremselements 16a abgebremst. Infolge der drehfesten Verbindung des Lüfterrads 78a mit der Antriebswelle und der drehfesten Verbindung des Bremselements 16a mit dem Lüfterrad 78a wird somit eine nachlaufende Drehbewegung der Antriebswelle nach einer Unterbrechung einer Energieversorgung bzw. ein Abschalten der Winkelschleifmaschine 52a durch eine Betätigung des Betätigungselements 20a abgebremst. Das Gegenbremselement 26a wird durch eine Federkraft des Federelements 32a in der Bremsstellung des Gegenbremselements 26a stets in Richtung des Bremselements 16a beaufschlagt.

In Figuren 6 bis 8 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem ersten Ausführungsbeispiel in den Figuren 1 bis 5, wobei bezüglich gleichbleibender Bauteile, Merkmale und Funktionen auf die Beschreibung des ersten Ausführungsbeispiels in den Figuren 1 bis 5 verwiesen werden kann.

Figur 6 zeigt eine Detailansicht einer alternativen Werkzeugmaschinenbremsvorrichtung 10b in einem in einem Werkzeugmaschinengehäuse 56b einer Winkelschleifmaschine 52b montierten Zustand der Werkzeugmaschinenbremsvorrichtung 10b. Die Winkelschleifmaschine 52b weist einen zu der in den Figuren 1 bis 5 beschriebenen Winkelschleifmaschine 52a analogen Aufbau auf. Die Werkzeugmaschinenbremsvorrichtung 10b umfasst eine mechanische Bremseinheit 12b, die ein drehbar um eine Drehachse 14b gelagertes Bremselement 16b aufweist, und eine Betätigungseinheit 18b zu einer Aktivierung und/oder einer Deaktivierung der Bremseinheit 12b, die ein beweglich gelagertes Betätigungselement 20b aufweist. Ferner weist die Werkzeugmaschinenbremsvorrichtung 10b eine Bewegungswandlungseinheit 22b auf, die ein Bewegungswandlungselement 24b aufweist, das dazu vorgesehen ist, eine Bewegung des Betätigungselements 20b in eine Bewegung eines Gegenbremselements 26b der Bremseinheit 12b in eine von einer entlang der Drehachse 14b des Bremselements 16b verlaufenden Richtung abweichende Richtung 28b, 30b umzuwandeln. Das Gegenbremselement 26b ist als scheibenförmiger Bremsbelag ausgebildet, der entlang einer Haupterstreckungsrichtung 64b zwischen dem auf einem drehfest mit einer Antriebswelle verbundenen Lüfterrad 78b aufgepressten Bremselement 16b und einem Getriebegehäuse 70b der Winkelschleifmaschine 52b angeordnet ist. Die Bremseinheit 12b weist hierbei ein Federelement 32b auf, das dazu vorgesehen ist, das Gegenbremselement 26b mit einer Federkraft in Richtung des Bremselements 16b zu beaufschlagen. Das Federelement 32b stütz sich hierbei mit einem Ende an dem Getriebegehäuse 70b ab. Ferner stützt sich das Federelement 32b mit einem anderen Ende an dem Gegenbremselement 26b ab.

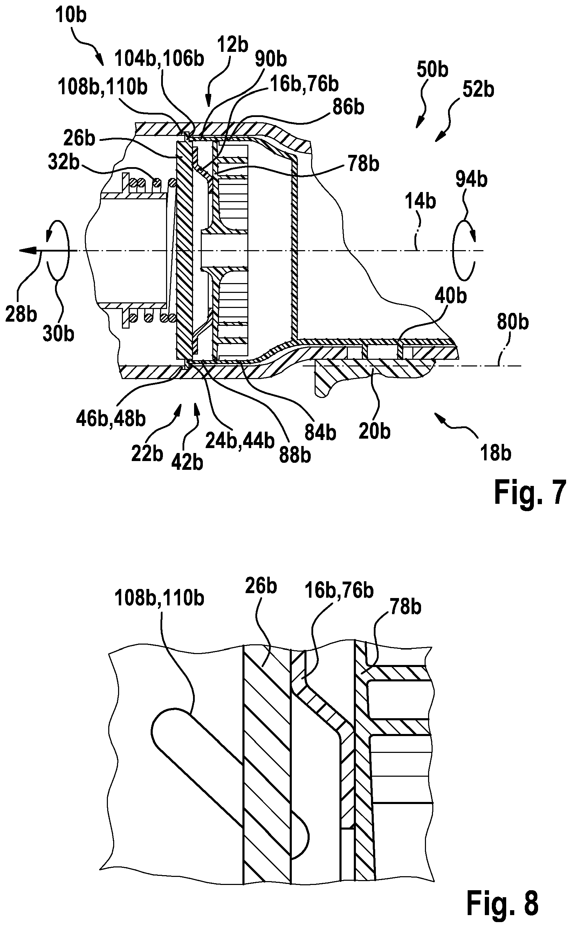

Die Bewegungswandlungseinheit 22b ist als Kurvengetriebe 42b ausgebildet. Das Kurvengetriebe 42b weist zwei Bewegungswandlungselemente 24b, 104b auf. Es ist jedoch auch denkbar, dass die Bewegungswandlungseinheit 22b eine von zwei abweichende Anzahl an Bewegungswandlungselementen 24b, 104b aufweist. Die Bewegungswandlungselemente 24b, 104b sind schwenkbar um die Drehachse 14b gelagert. Hierbei sind die Bewegungswandlungselemente 24b, 104b als Stifte 44b, 106b ausgebildet, die zur Umwandlung der Bewegung des Betätigungselements 20b mit jeweils einem weiteren Bewegungswandlungselement 46b, 108b der Bewegungswandlungseinheit 22b zusammenwirken. Die weiteren Bewegungswandlungselemente 46b, 106b sind jeweils als Nut 48b, 110b ausgebildet, in die jeweils ein Stift 44b, 106b zumindest teilweise eingreift (Figur 7).

Die als Stifte 44b, 106b ausgebildeten Bewegungswandlungselemente 24b, 104b sind gleichmäßig entlang einer Umfangsrichtung 94b an einem Umfang des Gegenbremselements 26b angeordnet (Figur 8). Die Umfangsrichtung 94b verläuft in einer sich zumindest im Wesentlichen senkrecht zur Drehachse 14b des Bremselements 16b erstreckenden Ebene. Die Stifte 44b, 106b sind einstückig mit dem Gegenbremselement 26b ausgebildet. Die als Nuten 48b, 110b ausgebildeten weiteren Bewegungswandlungselemente 46b, 108b sind in einer dem Bremselement 16b zugewandten Innenwand eines Werkzeugmaschinengehäuses 56b der Winkelschleifmaschine 52b eingebracht. Die Nuten 48b, 110b verlaufen in einer zur Drehachse 14b abgewinkelten Ebene. Es ist jedoch auch denkbar, dass die Stifte 44b, 106b an der Innenwand angeordnet sind und die Nuten 48b, 110b an dem Gegenbremselement 26b angeordnet sind. Zudem ist es denkbar, dass das Kurvengetriebe 42b eine andere, einem Fachmann als sinnvoll erscheinende Ausgestaltung aufweist, mittels der eine translatorische Bewegung in eine rotatorische Bewegung, die von einer translatorischen Bewegung überlagert wird, umgewandelt werden kann.

Zu einer Inbetriebnahme der Winkelschleifmaschine 52b wird das Betätigungselement 20b der Betätigungseinheit 18b von einem Bediener betätigt. Hierbei verschiebt der Bediener das Betätigungselement 20b ausgehend von einer Ausgangsstellung in einer Ausnehmung eines Motorgehäuses 66b der Winkelschleifmaschine 52b translatorisch in Richtung des Getriebegehäuses 70b in eine Endstellung des Betätigungselements 20b. Infolge der translatorischen Bewegung des Betätigungselements 20b in Richtung des Getriebegehäuses 70b wird ein am Betätigungselement 20b fixiertes Kopplungselement 40b ebenfalls in Richtung des Getriebegehäuses 70b bewegt. Ein Betätigungsbereich 88b des Kopplungselements 40b kommt in Kontakt mit dem Gegenbremselement 26b und übt während der Bewegung in Richtung des Getriebegehäuses 70b eine Kraft in Richtung des Getriebegehäuses 70b auf das Gegenbremselement 26b aus. Infolge der Krafteinwirkung des Kopplungselements und infolge eines Zusammenwirkens der Stifte 44b, 106b und den Nuten 48b, 110b wird das Gegenbremselement 26b entgegen einer Federkraft des Federelements 32b entlang einer Richtung 28b um die Drehachse 14b geschwenkt und gleichzeitig entlang einer Richtung 30b in Richtung des Getriebegehäuses 70b bewegt. Hierdurch wird ein Reibschluss zwischen dem Gegenbremselement 26b und dem Bremselement 16b aufgehoben und die Antriebswelle wird freigegeben.

Zu einer Unterbrechung eines Betriebs der Winkelschleifmaschine 52b wird das Betätigungselement 20b ausgehend von der Endstellung von dem Bediener translatorisch in Richtung eines Haupthandgriffs (hier nicht näher dargestellt) der Winkelschleifmaschine 52b in eine von dem Getriebegehäuse 70b abgewandte Richtung bewegt. Hierdurch wird das Kopplungselement 40b ebenfalls in Richtung des Haupthandgriffs bewegt. Somit gibt das Kopplungselement 40b eine Bewegungsmöglichkeit des Gegenbremselements 26b in Richtung des Bremselements 16b frei. Das Gegenbremselement 26b wird somit infolge einer Federkraft des Federelements 32b in Richtung des Bremselements 16b bewegt. Hierbei wird das Gegenbremselement 26b durch eine Federkraft des Federelements 32b und durch ein Zusammenwirken der Stifte 44b, 106b und den Nuten 48b, 110b entlang einer Richtung 28b um die Drehachse 14b geschwenkt und gleichzeitig entlang einer Richtung 30b in Richtung des Bremselements 16b bewegt, bis das Gegenbremselement 26b mit dem Bremselement 16b, das als Bremsscheibe 76b ausgebildet ist, in Kontakt kommt. Somit wird der Reibschluss zwischen Bremselement 16b und Gegenbremselement 26b geschlossen. Das Zusammenwirken der Stifte 44b, 106b und den Nuten 48b, 110b bewirkt zudem eine Selbsthemmung infolge einer Drehmitnahme des Gegenbremselements 26b durch das mit der Antriebswelle rotierende Bremselement 16b. Hierdurch wird die sich nach einer Unterbrechung einer Energieversorgung noch nachlaufende Antriebswelle gebremst.

## Patentansprüche

1. Handwerkzeugmaschinenbremsvorrichtung mit zumindest einer mechanischen Bremseinheit (12a), die zumindest ein drehbar um eine Drehachse (14a) gelagertes Bremselement (16a) aufweist, und mit zumindest einer Betätigungseinheit (18a) zu einer Aktivierung und/oder einer Deaktivierung der Bremseinheit (12a), die zumindest ein beweglich gelagertes Betätigungselement (20a) aufweist, wobei bei einer Aktivierung der Bremseinheit (12a) mittels der Betätigungseinheit (18a) ein Gegenbremselement (26a) der Bremseinheit (12a) und/oder das Bremselement (16a) in eine Bremsstellung überführt werden/wird und wobei bei einer Deaktivierung der Bremseinheit (12a) mittels der Betätigungseinheit (18a) das Gegenbremselement (26a) und/oder das Bremselement (16a) in eine Lösestellung überführt werden/wird, und mit zumindest einer Bewegungswandlungseinheit (22a), die zumindest ein Bewegungswandlungselement (24a) aufweist, das dazu vorgesehen ist, eine Bewegung des Betätigungselements (20a) in eine Bewegung des Gegenbremselements (26a) der Bremseinheit (12a) zumindest in eine von einer entlang der Drehachse (14a) des Bremselements (16a) verlaufende Richtung abweichende Richtung (28a) umzuwandeln,
**dadurch gekennzeichnet, dass** die Bewegungswandlungseinheit (22a) dazu vorgesehen ist, mittels des Bewegungswandlungselements (24a) eine Bewegung des Betätigungselements (20a) in eine Bewegung des Gegenbremselements (26a) quer zur Drehachse (14a) umzuwandeln.

2. Werkzeugmaschinenbremsvorrichtung nach Anspruch 1,
**dadurch gekennzeichnet, dass** das Bewegungswandlungselement (24a) schwenkbar gelagert ist.

3. Werkzeugmaschinenbremsvorrichtung nach einem der vorhergehenden Ansprüche,
**dadurch gekennzeichnet, dass** die Bremseinheit (12a) zumindest ein Federelement (32a) aufweist, das dazu vorgesehen ist, das Gegenbremselement (26a) mit einer Federkraft in Richtung des Bremselements (16a) zu beaufschlagen.

4. Werkzeugmaschinenbremsvorrichtung nach einem der vorhergehenden Ansprüche,
**dadurch gekennzeichnet, dass** das Bewegungswandlungselement (24a) als Wippe (34a) ausgebildet ist, die eine zumindest im Wesentlichen senkrecht zur Drehachse (14a) verlaufende Schwenkachse (36a) aufweist.

5. Werkzeugmaschinenbremsvorrichtung nach Anspruch 4,
**dadurch gekennzeichnet, dass** die Wippe (34a) zumindest einen abgewinkelten Bereich (38a, 102a) aufweist, der zur Umwandlung der Bewegung des Betätigungselements (20a) mit einem an dem Betätigungselement (20a) fixierten Kopplungselement (40a) der Betätigungseinheit (18a) zusammenwirkt.

6. Werkzeugmaschinenbremsvorrichtung zumindest nach Anspruch 4,
**dadurch gekennzeichnet, dass** das Gegenbremselement (26a) an der Wippe (34a) fixiert ist.

7. Werkzeugmaschinenbremsvorrichtung zumindest nach einem der Ansprüche 1 bis 3,
**dadurch gekennzeichnet, dass** die Bewegungswandlungseinheit als Kurvengetriebe ausgebildet ist.

8. Werkzeugmaschinenbremsvorrichtung nach Anspruch 7,
**dadurch gekennzeichnet, dass** das Bewegungswandlungselement als Stift ausgebildet ist, der zur Umwandlung der Bewegung des Betätigungselements mit zumindest einem weiteren Bewegungswandlungselement der Bewegungswandlungseinheit zusammenwirkt.

9. Werkzeugmaschinenbremsvorrichtung nach Anspruch 8,
**dadurch gekennzeichnet, dass** das weitere Bewegungswandlungselement als Nut ausgebildet ist, in die der Stift zumindest teilweise eingreift.

10. Tragbare Werkzeugmaschine, insbesondere Winkelschleifmaschine, mit zumindest einer Werkzeugmaschinenbremsvorrichtung nach einem der vorhergehenden Ansprüche.

## Claims

1. Hand-held power-tool braking device comprising at least one mechanical braking unit (12a), which has at least one braking element (16a) mounted so as to be rotatable about a rotation axis (14a), and comprising at least one actuating unit (18a), for activating and/or deactivating the braking unit (12a), that has at least one movably mounted actuating element (20a), wherein in the case of an activation of the braking unit (12a) by means of the actuating unit (18a), a counter-braking element (26a) of the braking unit (12a) and/or the braking element (16a) are/is brought into a braking position, and wherein in the case of a deactivation of the braking unit (12a) by means of the actuating unit (18a), the counter-braking element (26a) and/or the braking element (16a) are/is brought into a release position, and comprising at least one movement conversion unit (22a), which has at least one movement conversion element (24a) provided to convert a movement of the actuating element (20a) into a movement of the counter-braking element (26a) of the braking unit (12a), at least in a direction (28a) that differs from a direction extending along the rotation axis (14a) of the braking element (16a),
**characterized in that** the movement conversion unit (22a) is provided to convert a movement of the actuating element (20a) into a movement of the counter-braking element (26a) transversely in relation to the rotation axis (14a) by means of the movement conversion element (24a).

2. Power-tool braking device according to Claim 1,
**characterized in that** the movement conversion element (24a) is pivotably mounted.

3. Power-tool braking device according to either one of the preceding claims,
**characterized in that** the braking unit (12a) has at least one spring element (32a), which is provided to apply a spring force to the counter-braking element (26a) in the direction of the braking element (16a).

4. Power-tool braking device according to any one of the preceding claims,
**characterized in that** the movement conversion element (24a) is realized as a rocker (34a), which has a pivot axis (36a) that it at least substantially perpendicular to the rotation axis (14a).

5. Power-tool braking device according to Claim 4,
**characterized in that** the rocker (34a) has at least one angled region (38a, 102a), which, for the purpose of converting the movement of the actuating element (20a), acts in combination with a coupling element (40a) of the actuating unit (18a) that is fixed to the actuating element (20a).

6. Power-tool braking device at least according to Claim 4,
**characterized in that** the counter-braking element (26a) is fixed to the rocker (34a).

7. Power-tool braking device at least according to any one of Claims 1 to 3,
**characterized in that** the movement conversion unit is realized as a cam mechanism.

8. Power-tool braking device according to Claim 7,
**characterized in that** the movement conversion element is realized as a pin, which, for the purpose of converting the movement of the actuating element, acts in combination with at least one further movement conversion element of the movement conversion unit.

9. Power-tool braking device according to Claim 8,
**characterized in that** the further movement conversion element is realized as a groove, in which the pin engages, at least partially.

10. Portable power tool, in particular angle grinder, having at least one power-tool braking device according to any one of the preceding claims.

## Revendications

1. Dispositif de freinage pour une machine-outil portative avec au moins une unité de freinage mécanique (12a), qui présente au moins un élément de freinage (16a) monté de façon rotative autour d'un axe de rotation (14a), et avec au moins une unité d'actionnement (18a) permettant une activation et/ou une désactivation de l'unité de freinage (12a), qui présente au moins un élément d'actionnement (20a) monté de façon mobile, dans lequel lors d'une activation de l'unité de freinage (12a) au moyen de l'unité d'actionnement (18a) un contre-élément de freinage (26a) de l'unité de freinage (12a) et/ou l'élément de freinage (16a) est/sont amené(s) dans une position de freinage et dans lequel lors d'une désactivation de l'unité de freinage (12a) au moyen de l'unité d'actionnement (18a) le contre-élément de freinage (26a) et/ou l'élément de freinage (16a) est/sont amené (s) dans une position de libération, et avec au moins une unité de conversion de mouvement (22a), qui présente au moins un élément de conversion de mouvement (24a), qui est prévu pour convertir un mouvement de l'élément d'actionnement (20a) en un mouvement du contre-élément de freinage (26a) de l'unité de freinage (12a) au moins dans une direction (28a) s'écartant d'une direction s'étendant le long de l'axe de rotation (14a) de l'élément de freinage (16a),
**caractérisé en ce que** l'unité de conversion de mouvement (22a) est prévue pour convertir, au moyen de l'élément de conversion de mouvement (24a), un mouvement de l'élément d'actionnement (20a) en un mouvement du contre-élément de freinage (26a) transversalement à l'axe de rotation (14a).

2. Dispositif de freinage pour une machine-outil portative selon la revendication 1, **caractérisé en ce que** l'élément de conversion de mouvement (24a) est monté de façon pivotante.

3. Dispositif de freinage pour une machine-outil portative selon l'une quelconque des revendications précédentes, **caractérisé en ce que** l'unité de freinage (12a) présente au moins un élément de ressort (32a), qui est prévu pour pousser le contre-élément de freinage (26a) avec une force de ressort en direction de l'élément de freinage (16a).

4. Dispositif de freinage pour une machine-outil portative selon l'une quelconque des revendications précédentes, **caractérisé en ce que** l'élément de conversion de mouvement (24a) est réalisé sous la forme d'une bascule (34a), qui présente un axe de pivotement (36a) s'étendant de façon au moins essentiellement perpendiculaire à l'axe de rotation (14a).

5. Dispositif de freinage pour une machine-outil portative selon la revendication 4, **caractérisé en ce que** la bascule (34a) présente au moins une région coudée (38a, 102a), qui coopère avec un élément de couplage (40a) de l'unité d'actionnement (18a) fixé à l'élément d'actionnement (20a) pour la conversion du mouvement de l'élément d'actionnement (20a).

6. Dispositif de freinage pour une machine-outil portative au moins selon la revendication 4, **caractérisé en ce que** le contre-élément de freinage (26a) est fixé à la bascule (34a).

7. Dispositif de freinage pour une machine-outil portative selon au moins une des revendications 1 à 3, **caractérisé en ce que** l'unité de conversion de mouvement est formée par une transmission à cames.

8. Dispositif de freinage pour une machine-outil portative selon la revendication 7, **caractérisé en ce que** l'élément de conversion de mouvement est formé par une tige, qui coopère avec au moins un autre élément de conversion de mouvement de l'unité de conversion de mouvement pour la conversion du mouvement de l'élément d'actionnement.

9. Dispositif de freinage pour une machine-outil portative selon la revendication 8, **caractérisé en ce que** l'autre élément de conversion de mouvement est formé par une rainure, dans laquelle la tige s'engage au moins en partie.

10. Machine-outil portative, en particulier meuleuse d'angle, avec au moins un dispositif de freinage pour une machine-outil portative selon l'une quelconque des revendications précédentes.
